# EUROPÄISCHE PATENTSCHRIFT

(11) **EP 1 079 389 B1**
(45) Veröffentlichungstag und Bekanntmachung des Hinweises auf die Patenterteilung: **23.11.2005**
(21) Anmeldenummer: 00115971.4
(22) Anmeldetag: 26.07.2000
(51) Int. Cl.: G11B 33/02, G11C 7/16, B60R 11/02

(54) **Autoradio mit abnehmbarer Bedieneinheit**
Car radio with removable control unit
Autoradio avec unité de contrôle amovible

(30) Priorität: 20.08.1999 DE 19939433
(43) Veröffentlichungstag der Anmeldung: 28.02.2001
(73) Patentinhaber: SIEMENS AKTIENGESELLSCHAFT, 80333 München (DE)
(72) Erfinder: Braet, Patrick, 35578 Wetzlar (DE); Winterkorn, Horst, 35435 Wettenberg-Wissmar (DE)

(56) Entgegenhaltungen:
- EP-A- 0 286 600
- GB-A- 2 325 547

## Beschreibung

Die Erfindung betrifft ein Audiosystem für Kraftfahrzeuge mit einer Basiseinheit, die einen Rundfunkempfänger enthält, und einer mit der Basiseinheit über eine Schnittstelle verbindbaren und von der Basiseinheit trennbaren Bedieneinheit, die mindestens einige der Bedienelemente des Audiosystems, sowie eine Anzeigeeinheit und Mittel zur Ausgestaltung der Bedieneinheit als weitgehend eigenständiges Audiogerät enthält.

Ein solches Audiosystem ist aus der EP 0 286 600 A2 bekannt. Das dort beschriebene Audiosystem besteht aus einer Basiseinheit, die einen Rundfunkempfänger enthält, und einer von der Basiseinheit getrennten Bedieneinheit. Die Basiseinheit und die Bedieneinheit sind über ein Verbindungskabel miteinander verbunden. Die Bedieneinheit ist in einem separaten Halter im Fahrzeug befestigt. In die Bedieneinheit ist zusätzlich ein Kassettenabspielgerät enthalten, so daß die Bedieneinheit auch als eigenständiges Gerät nutzbar ist. Das dort beschriebene Audiogerät weist jedoch den Nachteil auf, daß die Bedieneinheit durch die Integration des Kassettenabspielgerätes relativ großvolumig ausfällt und daher separat von der Basiseinheit im Kraftfahrzeug montiert ist. Hierdurch ist eine Kabelverbindung zwischen diesen beiden Einheiten erforderlich.

Darüber hinaus sind Autoradios bekannt, bei denen die als Frontblende ausgebildete Bedieneinheit mit den Bedienelementen und gegebenenfalls einer Anzeigeeinheit flach und abnehmbar ausgebildet ist. Eine solche Bedieneinheit kann leicht in einer Kleidungstasche oder Handtasche mitgeführt werden. Hierdurch kann ein zusätzlicher Diebstahlschutz erreicht werden, da die im Fahrzeug zurückbleibende Basiseinheit im Falle eines Diebstahls ohne die Bedieneinheit wertlos ist.

Weiterhin sind aus der WO 98/57434 und WO 98/17502 Ausgestaltungen von Autoradios bekannt, bei denen in eine abnehmbare Bedieneinheit ein Mobilfunktelefon integriert ist.

Aufgabe der Erfindung ist es dagegen, ein Audiosystem der eingangs genannten Art so auszubilden, daß die Bedieneinheit als eigenständiges Audiogerät mit einer hohen Abspielqualität ausgebildet ist. Vorzugsweise soll die Bedieneinheit eine geringe Bautiefe aufweisen.

Die Aufgabe wird bei einem gattungsgemäßen Audiosystem dadurch gelöst, daß die Bedieneinheit zur Ausgestaltung als weitgehend eigenständiges digitales Audiogerät eine zentrale Recheneinheit zur Steuerung der Funktionenen des Audiogerätes, ein mit der zentralen Recheneinheit verbundenes Speicherelement für digitale Audiodaten sowie Mittel zur Umsetzung der digitalen Audiodaten in analoge Audiosignale enthält. Aufgrund der digitalen Abspeicherung der Audiodaten wird eine hohe Qualität der Audiowiedergabe erzielt. Sowohl die zentrale Recheneinheit als auch das Speicherelement sowie der Umsetzer zur Umsetzung der digitalen Audiodaten in analoge Audiosignale können sehr flach ausgeführt werden, so daß die Bautiefe einer solchermaßen ausgebildeten Bedieneinheit sich nicht wesentlich von der Bautiefe solcher Bedieneinheiten unterscheiden muß, die lediglich zum Zwecke des Diebstahlschutzes von der Basiseinheit trennbar sind. Infolgedessen kann die Bedieneinheit mit dem integrierten digitalen Audiogerät auch als Bedienblende direkt mit der Basiseinheit verbunden werden.

Um eine ausreichend lange Spieldauer des Audiogeräts mit den im Speicherelement abgespeicherten Audiodaten zu erreichen, ist insbesondere vorgesehen, im Speicherelement komprimierte digitale Audiodaten abzulegen. Die Komprimierung der Daten kann dabei nach jedem bekannten Verfahren erfolgen und soll eine möglichst große Reduzierung der Datenmenge bei gleichzeitig hoher Wiedergabequalität gewährleisten. Insbesondere kann es sich dabei um Audiodaten handeln, die nach dem Standard MP3 komprimiert sind.

MP3, genauer gesagt MPEG 1 Layer 3, ist ein Audioformat-Standard zur Komprimierung von Audiosequenzen, wie beispielsweise Musiktiteln. Hierbei wird eine Reduzierung der Datenmenge auf etwa 1/12 der Größe der Originaldatei bei gleichzeitig sehr geringen Qualitätsverlusten erreicht. Digitale Audiodaten werden typischerweise durch eine Abtastung des Analogsignals mit 16 bit pro Sekunde erzeugt. Da sich das Signalspektrum typischerweise über einen Bereich über 44,1 kHz erstreckt, ergibt sich daraus für Audioaufnahmen in CD-Qualität eine Datenmenge von 1,4 Millionen Bit pro Sekunde. Durch geeignete Kompressionsverfahren wie MP3 kann diese Datenmenge deutlich reduziert werden, ohne daß ein hörbarer Qualitätsverlust eintritt. MP3 wurde von der Motion Picture Experts Group (MPEG) entwickelt und von der International Organisation for Standardization (ISO) in einen Standard überführt. Eigenständige MP3 Abspielgeräte sind auf dem Markt erhältlich. Die entsprechende Technik ist daher dem Fachmann bekannt und muß hier nicht näher erläutert werden.

In einer besonderen Ausführungsform ist vorgesehen, daß die Bedieneinheit zur Wiedergabe von komprimierten Audiodaten nach mehreren verschiedenen Standards ausgebildet ist. Dies wird dadurch erreicht, daß die entsprechenden Algorithmen softwaremäßig in einem Speicherelement abgelegt sind und die Umsetzung von der Recheneinheit gesteuert wird.

Zur Ausgestaltung der Bedieneinheit als eigenständiges Audiogerät wird es in der Regel erforderlich sein, zusätzlich einen Verstärker zur Verstärkung der analogen Audiosignale in die Bedieneinheit zu integrieren. An einen solchen Verstärker kann dann ein Lautsprecher angeschlossen sein. Hierbei kann es sich zum einen um einen in die Bedieneinheit integrierten kleinen Lautsprecher handeln, zum anderen kann in der Bedieneinheit aber auch eine Schnittstelle zum Anschluß eines externen Lautsprechers, insbesondere eines Kopf- oder Ohrhörers, vorhanden sein.

Nach dem Standard MP3 komprimierte Audiodateien werden beispielsweise über das Internet verteilt. Weiterhin ist es auch im privaten Bereich bereits möglich, mit Hilfe eines Computers und der geeigneten Software aus auf CD abgespeicherten Musiktiteln komprimierte Audiodateien nach dem Standard MP3 zu erzeugen. Daher ist in einer besonderen Ausführungsform weiterhin vorgesehen, daß die Bedieneinheit eine Schnittstelle zum Anschluß an ein Computersystem enthält, so daß eine Übertragung digitaler Audiodaten von dem Computersystem in das Speicherelement erfolgen kann. Hierdurch können stets aktualisierte Audiodaten nach den Wünschen des Benutzers in das Speicherelement geladen werden.

In einer weiteren Ausführungsform ist vorgesehen, daß das Speicherelement von außen aus der Bedieneinheit entnehmbar ist. Bei dem Speicherelement handelt es sich dann insbesondere um eine Speicherkarte, beispielsweise eine Chipkarte oder die genormte PCMCIA Karte. In diesem Falle ist in der Bedieneinheit zusätzlich ein kleines Lesegerät enthalten, das die Daten von dem entnehmbaren Speicherelement auslesen kann. Bei dieser Ausführungsform besteht somit die Möglichkeit, unterschiedliche Musiktitel durch Einlegen des entsprechenden Speicherelementes abzuspielen. Dieses entspricht der bekannten Vorgehensweise bei Abspielgeräten für Kassetten oder CDs.

Die Basiseinheit des erfindungsgemäßen Audiosystems enthält einen Rundfunkempfänger. Ist die Bedieneinheit mit der Basiseinheit verbunden, so kann der Rundfunkempfänger über die Bedienelemente der Bedieneinheit bedient werden. Die elektrische Verbindung zwischen der Bedieneinheit und der Basiseinheit erfolgt dabei vorzugsweise durch eine Steckverbindung. Ist die Bedieneinheit mit der Basiseinheit verbunden, so können neben dem reinen Radiobetrieb auch die Audiodaten, die in dem Speicherelement der Bedieneinheit abgelegt sind, über die Komponenten des Audiosystems im Kraftfahrzeug ausgegeben werden. Hierzu muß eine Übertragung der Daten von der Bedieneinheit zu der Basiseinheit erfolgen. Enthält die Basiseinheit einen in Analogtechnik aufgebauten Rundfunkempfänger, so ist insbesondere vorgesehen, daß über eine Schnittstelle zwischen der Basiseinheit und der Bedieneinheit die analogen Audiosignale von der Bedieneinheit zur Basiseinheit übertragen werden. Ist der Rundfunkempfänger der Basiseinheit dagegen zumindest teilweise in Digitaltechnik aufgebaut, so können über eine Schnittstelle zwischen der Bedieneinheit und der Basiseinheit auch direkt die digitalen Audiosignale von der Bedieneinheit zur Basiseinheit übertragen und dort weiter verwertet werden. Die Musikausgabe erfolgt in beiden Fällen über die Lautsprecher des Audiosystems im Kraftfahrzeug.

In modernen Kraftfahrzeugen erfolgt zunehmend eine Verschmelzung bisher getrennt ausgeführter Systeme zu einer einzigen Einheit. Das erfindungsgemäße Audiosystem kann daher insbesondere auch mit einem Navigationssystem verbunden sein oder es kann ein solches Navigationssystem in das Audiosystem integriert sein.

Häufig erfolgt in Kraftfahrzeugen die optische Anzeige von Radiofunktionen getrennt von dem eigentlichen Audiosystem auch in einer fest in das Armaturenbrett installierten Anzeigeeinheit. Auch dies ist mit dem erfindungsgemäßen Audiosystem möglich, so daß in diesem Fall zusätzlich eine Verbindung von dem Audiosystem zu einer weiteren im Fahrzeug fest installierten Anzeigeeinheit vorhanden ist.

Des weiteren kann das Audiosystem mit einem zusätzlichen Abspiel- und/oder Speichergerät für Musik verbindbar sein, bzw. ein solches enthalten. Beispiele hierfür sind CD-Spieler, oder die neueren DVD- oder MD-Abspielgeräte oder auch ein tragbares Festplattenlaufwerk. Hierdurch können beispielsweise die von dem CD-Spieler oder dergleichen ausgelesenen Daten in die Bedieneinheit überspielt werden. Mit der entsprechenden Software zur Generierung von MP3 Dateien in der zentralen Recheneinheit der Bedieneinheit ist es somit möglich, direkt im Kraftfahrzeug von CD-Daten oder dergleichen MP3-Dateien zu erzeugen und im Speicherelement der Bedieneinheit abzulegen.

In einer weiteren Ausgestaltung der Erfindung ist vorgesehen, daß das Audiosystem mit einem Funktelefon verbindbar ist. In diesem Falle können auch digitale Audiodaten über die Funktelefonverbindung von einem Zentralrechner in das Audiosystem überspielt werden. Somit ist jederzeit eine Aktualisierung der Audiodaten möglich. Zur Verbesserung der Verkehrssicherheit kann zusätzlich vorgesehen sein, daß das Audiosystem ein Sprachsteuerungsmodul enthält, so daß eine Sprachsteuerung der Audiofunktionen möglich ist. Zusätzlich kann vorgesehen sein, daß die Verbindung zwischen dem Bedienelement und dem Basiselement optisch oder über eine Funkverbindung erfolgt.

Die Erfindung wird nachfolgend anhand eines Ausführungsbeispiels näher beschrieben.

Es zeigen:
- Fig. 1:: ein Übersichtsbild eines Autoradios mit abnehmbarer Bedieneinheit,
- Fig. 2:: ein Blockschaltbild der Elemente der Bedieneinheit.

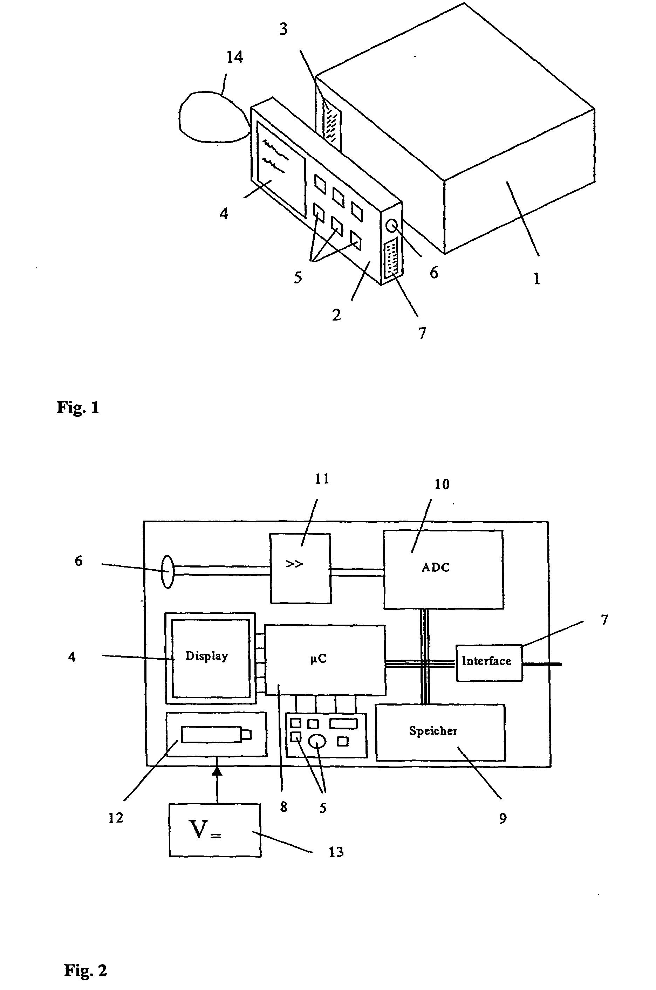

Figur 1 zeigt ein Übersichtsbild eines erfindungsgemäßen Autoradios, das eine fest im Fahrzeug installierte Basiseinheit 1 und eine von der Basiseinheit 1 trennbare Bedieneinheit 2 aufweist. Die elektrische Verbindung zwischen der Basiseinheit 1 und der Bedieneinheit 2 erfolgt über eine Schnittstelle 3. Im Ausführungsbeispiel ist die Bedieneinheit so ausgeführt, daß sie als Bedienblende direkt mit der Basiseinheit 1 verbindbar ist. Die geeigneten Mittel zur sicheren Verbindung der Basiseinheit 1 mit der Bedieneinheit 2, die gleichzeitig ein leichtes Abnehmen der Bedieneinheit 2 ermöglichen, sind aus dem Stand der Technik bekannt und in Fig. 1 nicht dargestellt.

Die Bedieneinheit enthält als sichtbare Bestandteile eine Anzeigeeinheit 4 und mehrere Bedienelemente 5. Weiterhin kann eine Tragevorrichtung 14 oder ein Befestigungsclip zum Befestigen der Bedieneinheit an einem Kleidungsstück vorhanden sein.

Ist die Bedieneinheit 2 mit der Basiseinheit 1 verbunden, so kann das Audiosystem über die Bedienelemente 5 der Bedieneinheit 2 bedient werden. Die üblichen Anzeigen eines Audiosystems sind dann auf der Anzeigeeinheit 4 sichtbar. In abgenommenen Zustand kann die Bedieneinheit 2 als eigenständiges Audiogerät genutzt werden. Die Bedienung erfolgt dabei wiederum über die Bedienelemente 5 und die Anzeigefunktion, wie beispielsweise Titel des gespielten Liedes, über die Anzeigeeinheit 4. Die Bedieneinheit 2 enthält ferner einen Anschluß 6 über den ein Ohr- oder Kopfhörer an die Bedieneinheit 2 angeschlossen werden kann. Alternativ kann auch ein kleiner Lautsprecher in der Bedieneinheit 2 vorhanden sein, über den die Audiowiedergabe erfolgt. Weiter hin enthält die Bedieneinheit 2 eine PC-Schnittstelle 7, über die komprimierte digitale Audiodaten von einem Computersystem in das Speicherelement der Bedieneinheit 2 überspielt werden können. In einer abgewandelten Ausführungsform ist vorgesehen, daß alternativ oder zusätzlich zu der PC-Schnittstelle 7 in der Bedieneinheit 2 ein Lesegerät zu Auslesen von Chipkarten vorhanden ist, auf denen die Audiodaten abgespeichert sind.

Fig. 2 zeigt die wesentlichen Komponenten der Bedieneinheit als Blockschaltbild. Zentraler Bestandteil der Bedieneinheit ist eine Recheneinheit 8 zur Steuerung der verschiedenen Funktionen der Bedieneinheit 2. Die Recheneinheit 8 ist mit Bedienelementen 5 verbunden, über die Eingaben am Gerät vorgenommen werden können. Weiterhin ist die Recheneinheit 8 mit der Anzeigeeinheit 4 verbunden und steuert diese an. Weiterhin enthält die Bedieneinheit einen Massenspeicher 9, der hinsichtlich seiner Größe so dimensioniert ist, daß Audiodaten für eine befriedigend lange Spieldauer des Audiogerätes darin abgelegt werden können. Die im Massenspeicher 9 abgelegten Audiodaten werden durch die Recheneinheit 8 aus dem Massenspeicher 9 ausgelesen und gegebenenfalls aufbereitet und an einen Wandler 10 weitergeleitet, in dem eine Umsetzung der digitalen Audiodaten in Analogsignale erfolgt. Die analogen Audiosignale werden schließlich vom Wandler 10 an einen Verstärker 11 weitergeleitet, der einen für die Wiedergabe ausreichenden Signalpegel erzeugt. Die verstärkten Analogsignale werden dann an einen Anschluß 6 weitergeleitet, an den ein externer Lautsprecher, insbesondere ein Ohrhörer, anschließbar ist. Weiterhin enthält die Bedieneinheit 2 die PC-Schnittstelle 7 zur Verbindung der Bedieneinheit mit einem externen Computersystem und zur Überspielung von komprimierten Audiodaten von dem externen Computersystem in den Massenspeicher 9. Zur Energieversorgung enthält die Bedieneinheit weiterhin eine wiederaufladbare Batterie 12. Ist die Bedieneinheit 2 mit der Basiseinheit 1 verbunden, so ist insbesondere vorgesehen, daß die wiederaufladbare Batterie 12 mit der elektrischen Energieversorgungseinheit 13 des Kraftfahrzeuges bzw. der Basiseinheit 1 verbunden ist.

## Patentansprüche

1. Audiosystem für Kraftfahrzeuge mit einer Basiseinheit (1), die einen Rundfunkempfänger enthält, und einer mit der Basiseinheit (1) über eine Schnittstelle (3) verbindbaren und von der Basiseinheit (1) trennbaren Bedieneinheit (2), die mindestens einige der Bedienelemente (5) des Audiosystems, sowie eine Anzeigeeinheit (4) und Mittel zur Ausgestaltung der Bedieneinheit (2) als weitgehend eigenständiges Audiogerät enthält, **dadurch gekennzeichnet, daß** die Bedieneinheit (2) zur Ausgestaltung als weitgehend eigenständiges digitales Audiogerät eine zentrale Recheneinheit (8) zur Steuerung der Funktionen des Audiogeräts, ein mit der zentralen Recheneinheit (8) verbundenes Speicherelement (9) für digitale Audiodaten sowie Mittel zur Umsetzung der digitalen Audiodaten in analoge Audiosignale enthält.

2. Audiosystem nach Anspruch 1, **dadurch gekennzeichnet, daß** die Bedieneinheit (2) als Bedienblende direkt mit der Basiseinheit (1) verbindbar ist.

3. Audiosystem nach Anspruch 1 oder 2, **dadurch gekennzeichnet, daß** es sich um komprimierte digitale Audiodaten handelt und Mittel zur Umsetzund der komprimierten digitalen Audiodaten in analoge Audiosignale vorhanden sind.

4. Audiosystem nach Anspruch 3, **dadurch gekennzeichnet, daß** das Audiogerät der Bedieneinheit zur Wiedergabe von komprimierten Audiodaten nach dem Standard MP3 ausgebildet ist.

5. Audiosystem nach Anspruch 3 oder 4, **dadurch gekennzeichnet, daß** die Bedieneinheit (2) zur Wiedergabe von nach unterschiedlichen Standards komprimierten Audiodaten ausgebildet ist.

6. Audiosystem nach einem der vorhergehenden Ansprüche, **dadurch gekennzeichnet, daß** die Bedieneinheit (2) zusätzlich einen Verstärker (11) zur Verstärkung der analogen Audiosignale enthält.

7. Audiosystem nach einem der vorhergehenden Ansprüche, **dadurch gekennzeichnet, daß** die Bedieneinheit (2) eine Schnittstelle (Anschluß 6) zur Ausgabe der analogen Audiosignale an einen externen Lautsprecher, insbesondere einen Kopf- oder Ohrhörer, aufweist.

8. Audiosystem nach einem der vorhergehenden Ansprüche, **dadurch gekennzeichnet, daß** die Bedieneinheit (2) einen mit dem Verstärker (11) verbundenen Lautsprecher enthält.

9. Audiosystem nach einem der vorhergehenden Ansprüche, **dadurch gekennzeichnet, daß** die Bedieneinheit (2) eine Schnittstelle (7) zum Anschluß an ein Computersystem enthält, so daß eine Übertragung digitaler Audiodaten von dem Computersystem in das Speicherelement (9) erfolgen kann.

10. Audiosystem nach einem der vorhergehenden Ansprüche, **dadurch gekennzeichnet, daß** das Speicherelement (9) als von außen aus der Bedieneinheit (2) entnehmbares Speicherelement, insbesondere als Speicherkarte, ausgebildet ist.

11. Audiosystem nach einem der vorhergehenden Ansprüche, **dadurch gekennzeichnet, daß** die Basiseinheit (1) einen in Analogtechnik aufgebauten Rundfunkempfänger enthält und eine Schnittstelle zur Übertragung der analogen Audiosignale von der Bedieneinheit (2) zur Basiseinheit (1) vorhanden ist.

12. Audiosystem nach einem der vorhergehenden Ansprüche, **dadurch gekennzeichnet, daß** die Basiseinheit (1) einen zumindest teilweise in Digitaltechnik aufgebauten Rundfunkempfänger enthält und eine Schnittstelle zur Übertragung der digitalen Audiosignale von der Bedieneinheit (2) zur Basiseinheit (1) vorhanden ist.

13. Audiosystem nach einem der vorhergehenden Ansprüche, **dadurch gekennzeichnet, daß** in die Basiseinheit (1) zusätzlich ein Informationssystem, insbesondere ein Navigationssystem, integriert ist.

14. Audiosystem nach einem der vorhergehenden Ansprüche, **dadurch gekennzeichnet, daß** die Bedieneinheit (2) eine wiederaufladbare Energieversorgungseinheit (Batterie 12) enthält, die mit der Energieversorgung der Basiseinheit (1) verbindbar ist.

15. Audiosystem nach einem der vorhergehenden Ansprüche, **dadurch gekennzeichnet, daß** das Audiosystem mit einem Funktelefon verbindbar ist und zum Abspeichem der über Funk empfangenen digitalen Daten im Speicherelement (9) der Bedieneinheit (2) ausgelegt ist.

16. Audiosystem nach einem der vorhergehenden Ansprüche, **dadurch gekennzeichnet, daß** das Audiosystem mit einem weiteren Speicher-und/oder Abspielgerät für Musik, insbesondere einem CD-, MD- oder DVD-Abspielgerät oder einem Festplattenspeicher, verbindbar ist bzw. ein solches enthält und daß von dem weiteren Speicher- und/oder Abspielgerät ausgelesene Daten in das Speicherelement (9) übertragbar sind.

17. Audiosystem nach einem der vorhergehenden Ansprüche, **dadurch gekennzeichnet, daß** es ein Sprachsteuerungsmodul enthält

18. Audiosystem nach einem der vorhergehenden Ansprüche, **dadurch gekennzeichnet, daß** die Verbindung zwischen dem Bedienelement (2) und dem Basiselement (1) optisch oder über eine Funkverbindung erfolgt.

19. Audiosystem nach einem der vorhergehenden Ansprüche, **dadurch gekennzeichnet, daß** zusätzlich eine Verbindung zu einem im Fahrzeug fest installierten Anzeigeelement vorhanden ist.

20. Audiosystem nach einem der vorhergehenden Ansprüche, **dadurch gekennzeichnet, daß** die Bedieneinheit (2) eine Tragevorrichtung (14) enthält.

21. Bedieneinheit zur Verwendung in einem Audiosystem für Kraftfahrzeuge nach einem der vorhergehenden Ansprüche, **dadurch gekennzeichnet, dass** die Bedieneinheit (2) mindestens einige der Bedienelemente (5) des Audiosystems sowie eine Anzeigeeinheit (4) und Mittel zur Ausgestaltung der Bedieneinheit (2) als weitgehend eigenständiges Audiogerät enthält, wobei die Bedieneinheit (2) zur Ausgestaltung als weitgehend eigenständiges digitales Audiogerät eine zentrale Recheneinheit (8) zur Steuerung der Funktionen des Audiogeräts, ein mit der zentralen Recheneinheit (8) verbundenes Speicherelement (9) für digitale Audiodaten sowie Mittel zur Umsetzung der digitalen Audiodaten in analoge Audiosignale enthält.

## Claims

1. Audio system for motor vehicles having a base unit (1), which contains a broadcast radio receiver, and an operating unit (2) which can be connected to the base unit
(1) via an interface (3) and can be separated from the base unit (1), and which contains at least some of the control elements (5) for the audio system and also a display unit (4) and means for configuring the operating unit (2) as a largely stand-alone audio appliance, **characterized in that** the operating unit (2) contains, in order to be configured as a largely stand-alone digital audio appliance, a central processing unit (8) for controlling the functions of the audio appliance, a memory element (9) connected to the central processing unit (8) for digital audio data and also means for converting the digital audio data into analogue audio signals.

2. Audio system according to Claim 1, **characterized in that** the operating unit (2) can be connected directly to the base unit (1) as a control panel.

3. Audio system according to Claim 1 or 2, **characterized in that** compressed digital audio data are involved and means for converting the compressed digital audio data into analogue audio signals are provided.

4. Audio system according to Claim 3, **characterized in that** the audio appliance in the operating unit is designed to reproduce compressed audio data based on the MP3 standard.

5. Audio system according to Claim 3 or 4, **characterized in that** the operating unit (2) is designed to reproduce audio data compressed on the basis of different standards.

6. Audio system according to one of the preceding claims, **characterized in that** the operating unit (2) additionally contains an amplifier (11) for amplifying the analogue audio signals.

7. Audio system according to one of the preceding claims, **characterized in that** the operating unit (2) has an interface (connection 6) for outputting the analogue audio signals to an external loudspeaker, particularly to headphones or earphones.

8. Audio system according to one of the preceding claims, **characterized in that** the operating unit (2) contains a loudspeaker connected to the amplifier (11).

9. Audio system according to one of the preceding claims, **characterized in that** the operating unit (2) contains an interface (7) for connection to a computer system, so that it is possible to transfer digital audio data from the computer system to the memory element (9).

10. Audio system according to one of the preceding claims, **characterized in that** the memory element (9) is in the form of a memory element which can be removed from the operating unit (2) externally, particularly in the form of a memory card.

11. Audio system according to one of the preceding claims, **characterized in that** the base unit (1) contains a broadcast radio receiver designed using analogue technology, and an interface is provided for transferring the analogue audio signals from the operating unit (2) to the base unit (1).

12. Audio system according to one of the preceding claims, **characterized in that** the base unit (1) contains a broadcast radio receiver which is at least partly designed using digital technology, and an interface is provided for transferring the digital audio signals from the operating unit (2) to the base unit (1).

13. Audio system according to one of the preceding claims, **characterized in that** the base unit (1) additionally has an information system, particularly a navigation system, integrated in it.

14. Audio system according to one of the preceding claims, **characterized in that** the operating unit (2) contains a rechargeable power supply unit (battery 12) which can be connected to the power supply for the base unit (1).

15. Audio system according to one of the preceding claims, **characterized in that** the audio system can be connected to a radio telephone and is designed to store the digital data received by radio in the memory element (9) in the operating unit (2).

16. Audio system according to one of the preceding claims, **characterized in that** the audio system can be connected to a further memory and/or playback appliance for music, particularly to a CD, MD or DVD player or to a hard disk memory, or contains such an appliance, and **in that** data read from the further memory and/or playback appliance can be transferred to the memory element (9).

17. Audio system according to one of the preceding claims, **characterized in that** it contains a voice control module.

18. Audio system according to one of the preceding claims, **characterized in that** the connection between the control element (2) and the base element (1) is made optically or by means of a radio link.

19. Audio system according to one of the preceding claims, **characterized in that** there is additionally a connection to a display element which is installed permanently in the vehicle.

20. Audio system according to one of the preceding claims, **characterized in that** the operating unit (2) contains a supporting apparatus (14).

21. Operating unit for use in an audio system for motor vehicles according to one of the preceding claims, **characterized in that** the operating unit (2) contains at least some of the control elements (5) for the audio system and also a display unit (4) and means for configuring the operating unit (2) as a largely stand-alone audio appliance, where the operating unit (2) contains, in order to be configured as a largely stand-alone digital audio appliance, a central processing unit (8) for controlling the functions of the audio appliance, a memory element (9) connected to the central processing unit (8) for digital audio data and also means for converting the digital audio data into analogue audio signals.

## Revendications

1. Système audio pour véhicules automobiles comportant une unité de base (1), qui renferme un récepteur de radiodiffusion, et une unité de commande (2), pouvant être raccordée à l'unité de base (1) par l'intermédiaire d'une interface (3) et pouvant être séparée de l'unité de base (1), unité de commande (2) qui renferme au moins quelques-uns des éléments de commande (5) du système audio, ainsi qu'une unité d'affichage (4) et des moyens permettant de configurer l'unité de commande (2) comme appareil audio largement autonome, **caractérisé par le fait que** l'unité de commande (2) comprend, pour la concevoir comme appareil radio numérique largement autonome, une unité centrale de calcul (8) destinée au contrôle des fonctions de l'appareil audio, un élément de mémorisation (9) pour des données audio numériques relié à l'unité centrale de calcul (8), ainsi que des moyens permettant de convertir les données audio numériques en signaux audio analogiques.

2. Système audio selon la revendication 1 **caractérisé par le fait que** l'unité de commande (2) peut être directement reliée à l'unité de base (1) comme platine de commande.

3. Système audio selon la revendication 1 ou 2 **caractérisé par le fait qu'**il s'agit de données audio numériques compressées et que des moyens permettent de convertir les données audio numériques compressées en signaux audio analogiques.

4. Système audio selon la revendication 3 **caractérisé par le fait que** l'appareil audio de l'unité de commande est conçu pour la reproduction de données audio compressées selon la norme MP3.

5. Système audio selon la revendication 3 ou 4 **caractérisé par le fait que** l'unité de commande (2) est conçue pour la reproduction de données audio compressées selon différentes normes.

6. Système audio selon l'une des revendications précédentes **caractérisé par le fait que** l'unité de commande (2) comprend en supplément un amplificateur (11) destiné à l'amplification des signaux audio analogiques.

7. Système audio selon l'une des revendications précédentes **caractérisé par le fait que** l'unité de commande (2) comporte une interface (raccordement 6) permettant d'éditer les signaux audio analogiques avec un haut-parleur, notamment, un casque d'écoute ou un écouteur intra-auriculaire.

8. Système audio selon l'une des revendications précédentes **caractérisé par le fait que** l'unité de commande (2) comprend un haut-parleur relié à l'amplificateur (11).

9. Système audio selon l'une des revendications précédentes **caractérisé par le fait que** l'unité de commande (2) comprend une interface (7) permettant de raccorder un système d'ordinateur, si bien qu'il peut y avoir une transmission de données audio numériques du système d'ordinateur vers l'élément de mémoire (9).

10. Système audio selon l'une des revendications précédentes **caractérisé par le fait que** l'élément de mémoire (9) est conçu comme élément de mémoire pouvant être sorti de l'unité de commande (2) à partir de l'extérieur, notamment, comme carte à puce.

11. Système audio selon l'une des revendications précédentes **caractérisé par le fait que** l'unité de base (1) renferme un récepteur de radiodiffusion réalisé en technologie analogique et une interface pour la transmission des signaux audio analogiques de l'unité de commande (2) à l'unité de base (1) .

12. Système audio selon l'une des revendications précédentes **caractérisé par le fait que** l'unité de base 1 renferme un récepteur de radiodiffusion réalisé au moins partiellement en technologie numérique et qu'il y a une interface permettant de transmettre les signaux audio numériques de l'unité de commande (2) à l'unité de base (1).

13. Système audio selon l'une des revendications précédentes **caractérisé par le fait qu'**un système d'information, notamment un système de navigation, est intégré en supplément dans l'unité de base (1).

14. Système audio selon l'une des revendications précédentes **caractérisé par le fait que** l'unité de commande (2) renferme une unité d'alimentation en énergie rechargeable (accumulateur 12), qui peut être raccordée à l'alimentation en énergie de l'unité de base (1).

15. Système audio selon l'une des revendications précédentes **caractérisé par le fait que** le système audio peut être raccordé à un radiotéléphone et qu'il est dimensionné pour mémoriser les données numériques reçues par radio dans l'élément de mémoire (9) de l'unité de commande (2).

16. Système audio selon l'une des revendications précédentes **caractérisé par le fait que** le système audio peut être relié à un autre appareil de mémorisation et / ou à un autre lecteur de musique, notamment à un lecteur de disques compacts (ou CD), de disques MD ou de disques DVD ou à une mémoire à disque dur ou renferme un tel appareil et que des données lues sur l'autre appareil de mémorisation ou lecteur peuvent être transmises à l'élément de mémoire (9).

17. Système audio selon l'une des revendications précédentes **caractérisé par le fait qu'**il renferme un module de commande vocale.

18. Système audio selon l'une des revendications précédentes **caractérisé par le fait que** la liaison entre l'élément de commande (2) et l'élément de base (1) se fait optiquement ou par l'intermédiaire d'une liaison radio.

19. Système audio selon l'une des revendications précédentes **caractérisé par le fait qu'**il y a, en supplément, une liaison avec un élément d'affichage installé fixe dans le véhicule.

20. Système audio selon l'une des revendications précédentes **caractérisé par le fait que** l'unité de commande (2) comporte un dispositif de transport (14).

21. Unité de commande destinée à être utilisée dans un système audio pour véhicules automobiles selon l'une des revendications précédentes, **caractérisée par le fait que** l'unité de commande (2) comprend au moins quelques-uns des éléments de commande (5) du système audio, ainsi qu'une unité d'affichage (4) et des moyens permettant de configurer l'unité de commande (2) en tant qu'appareil audio largement autonome, l'unité de commande (2) comprenant, pour sa configuration en tant qu'appareil audio numérique largement autonome, une unité centrale de calcul (8) destinée au contrôle des fonctions de l'appareil audio, un élément de mémorisation (9) de données audio numériques relié à l'unité centrale de calcul (8), ainsi que des moyens permettant de convertir les données audio numériques en signaux audio analogiques.
